# EUROPÄISCHE PATENTSCHRIFT

(11) **EP 1 287 572 B1**
(45) Veröffentlichungstag und Bekanntmachung des Hinweises auf die Patenterteilung: **17.03.2004**
(21) Anmeldenummer: 01943119.6
(22) Anmeldetag: 19.05.2001
(51) Int. Cl.: H01M 8/02, H01M 8/24

(54) **VORRICHTUNG ZUR ELEKTRISCHEN KONTAKTIERUNG VON ELEKTRODEN IN HOCHTEMPERATURBRENNSTOFFZELLEN**
DEVICE FOR ELECTRICALLY CONTACTING ELECTRODES IN HIGH-TEMPERATURE FUEL CELLS
DISPOSITIF DE MISE EN CONTACT ELECTRIQUE D'ELECTRODES DANS DES CELLULES A COMBUSTIBLE HAUTE TEMPERATURE

(30) Priorität: 05.06.2000 DE 10027311
(43) Veröffentlichungstag der Anmeldung: 05.03.2003
(73) Patentinhaber: Forschungszentrum Jülich GmbH, 52425 Jülich (DE)
(72) Erfinder: BATFALSKY, Peter, 52428 Jülich (DE); MEULENBERG, Wilhelm, Albert, NL-6294 AA Vijlen (NL); DE HAART, Lambertus, Gerardus, Johannes, NL-6414 JE Heerlen (NL)
(86) Internationale Anmeldenummer: PCT/DE2001/001922
(87) Internationale Veröffentlichungsnummer: WO 2001/095416

(56) Entgegenhaltungen:
- EP-A- 0 423 448
- EP-A- 0 993 059
- WO-A-99/13522
- DE-C- 19 805 674
- PATENT ABSTRACTS OF JAPAN vol. 018, no. 047 (E-1496), 25. Januar 1994 (1994-01-25) & JP 05 275106 A (MITSUI ENG & SHIPBUILD CO LTD), 22. Oktober 1993 (1993-10-22)

## Beschreibung

Die Erfindung bezieht sich auf eine Vorrichtung zur elektrischen Kontaktierung von Elektroden in Hochtemperaturbrennstoffzellen.

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Verschiedene Brennstoffzellentypen sind bekannt, beispielsweise die SOFC-Brennstoffzelle aus der Druckschrift DE 44 30 958 C1 sowie die PEM-Brennstoffzelle aus der Druckschrift DE 195 31 852 C1.

Die SOFC-Brennstoffzelle wird auch Hochtemperaturbrennstoffzelle genannt, da ihre Betriebstemperatur bis zu 1000 °C betragen kann. An der Kathode einer Hochtemperaturbrennstoffzelle bilden sich in Anwesenheit des Oxidationsmittels Sauerstoffionen. Die Sauerstoffionen passieren den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.

Mehrere Brennstoffzellen werden in der Regel zur Erzielung großer elektrischer Leistungen durch verbindende Elemente elektrisch und mechanisch durch Interkonnektoren miteinander verbunden. Ein Beispiel für ein verbindendes Element stellt die bipolare Platte dar. Mittels bipolarer Platten entstehen übereinander gestapelte, elektrisch in Serie geschaltete Brennstoffzellen. Diese Anordnung wird Brennstoffzellenstapel genannt. Ein Brennstoffzellenstapel besteht aus den bipolaren Platten und den Elektroden-Elektrolyt-Einheiten.

Aus EP-A-0993059 ist eine Interkonnektorplatte bekannt, welche durchgehende Öffnungen aufweist, die mit einem leitfähigen Material gefüllt sind.

Interkonnektoren besitzen neben den elektrischen und mechanischen Eigenschaften regelmäßig auch Gasverteilerstrukturen. Bei der bipolaren Platte werden diese durch Stege mit Elektrodenkontakt realisiert, die Gaskanäle zur Versorgung der Elektroden voneinander trennen (DE 44 10 711 C1). Gasverteilerstrukturen bewirken, daß die Betriebsmittel gleichmäßig in den Elektrodenräumen (Räume in denen sich die Elektroden befinden) verteilt werden.

Nachteilig können bei Brennstoffzellen und Brennstoffzellenstapeln folgende Probleme auftreten:
- Metallische bipolare Platten mit einem hohen Chromgehalt bilden leitende Chromoxid-Deckschichten aus; im Betrieb kommt es durch Abdampfen von Chrom zu Alterungserscheinungen innerhalb der Brennstoffzelle.
- Metallische bipolare Platten mit hohem Aluminiumgehalt bilden Al₂O₃-Deckschichten aus, die nachteilig wie ein elektrischer Isolator wirken.
- In einem Brennstoffzellenstapel können zwischen den bekannten starren bipolaren Platten und den Elektroden-Elektrolyt-Einheiten schlecht leitende Kontaktpunkte vorliegen. Diese beruhen u.a. auf Fertigungstoleranzen bei der Herstellung von bipolaren Platten bzw. Elektroden-Elektrolyt-Einheiten.

Aufgabe der Erfindung ist es daher, eine Vorrichtung bereit zu stellen, die eine langzeitstabile, elektrische Kontaktierung der Elektroden in Hochtemperaturbrennstoffzellen gewährleistet. Ein Verfahren zur Herstellung einer solchen Vorrichtung wird angegeben.

Die Aufgabe wird durch eine Vorrichtung nach Anspruch 1 gelöst. Sie ist gekennzeichnet durch eine Interkonnektorplatte mit Öffnungen und darin befindlichen Kontaktelementen zur elektrischen Kontaktierung der Elektroden, wobei die Kontaktelemente auf beiden Seiten der Interkonnektorplatte in vorgegebener Höhe herausragen und die Öffnungen gasdicht verschließen. Diese Lehre vermittelt, daß der Stromfluß durch die Interkonnektorplatte hindurch durch die Kontaktelemente gewährleistet wird. Tragende und stromleitende Funktionen werden dadurch entkoppelt und durch die Interkonnektorplatte bzw. die Kontaktelemente gewährleistet. Dadurch ist man in der Wahl des Materials für die Interkonnektorplatte weitgehend frei. Es empfiehlt sich hochtemperaturbeständiges Material für die Interkonnektorplatte zu benutzen, wobei auch nicht metallische Materialien eingesetzt werden können. Als Kontaktelemente können Setzköpfe, Stifte, Drähte und Nieten oder weitere den Gegebenheiten angepaßte Formen aus stromleitenden und insbesondere leicht verformbaren Materialien eingesetzt werden. Die Kontaktelemente sind derart mit der Interkonnektorplatte verbunden, daß sie die Öffnungen gasdicht verschließen. Die Höhe der aus der Interkonnektorplatte herausragenden Kontaktelemente sowie die Abstände der Kontaktelemente zueinander kann dabei die Höhe und Breite von Gasverteilerstrukturen vorgeben. Dies führt zu einer Reduktion an Arbeitszeit und Herstellungskosten.

In Ausbildung der Erfindung ist gemäß Anspruch 2 vorgesehen, daß alle Kontaktelemente gleich hoch aus der Interkonnektorplatte herausragen (Anspruch 2). Dadurch wird der elektrische Kontakt durch alle Kontaktelemente gewährleistet.

Besonders vorteilhaft enthalten die Kontaktelemente mindestens 99,97 % Silber (Anspruch 3). Die Kontaktelemente bestehen dann aus Feinsilber. Silber bietet den Vorteil, daß es unter reduzierenden und oxidierenden Bedingungen langzeitstabil den Strom gut leitet, da es keine dichten Korrosionsprodukte bildet, welche den Kontaktwiderstand erhöhen würden. Es können aber auch andere stromleitende, verformbare Materialien und insbesondere Edelmetalle, wie beispielsweise Platin (Pt), Gold (Au) oder Palladium (Pd) als Ausgangsmaterial der Kontaktelemente dienen.

Gemäß Anspruch 4 umfaßt eine Hochtemperaturbrennstoffzelle eine solche erfindungsgemäße Vorrichtung. Durch die Eigenschaften der Kontaktelemente, wie beispielsweise Hochtemperaturbeständigkeit und Oxidationsresistenz, wird eine langzeitstabile Kontaktierung der Elektroden durch die Verringerung des Kontaktwiderstandes in der Hochtemperaturbrennstoffzelle erzielt.

Besonders vorteilhaft umfaßt eine Hochtemperaturbrennstoffzelle zwischen den Kontaktelementen und einer Anode als Elektrode ein elastisches Nickelnetz (Anspruch 5). Dieses Nickelnetz dient als zusätzliches Mittel dazu, den elektrischen Kontakt zwischen der Anode und den Kontaktelementen über die Gitterpunkte des Netzes gleichmäßig zu gewährleisten und somit die oben genannten nachteiligen Fertigungstoleranzen auszugleichen.

In einer weiteren Ausgestaltung einer Hochtemperaturbrennstoffzelle umfaßt diese zwischen den Kontaktelementen und einer Kathode als Elektrode ein elastisches Silbernetz (Anspruch 6). Dieses dient als zusätzliches Mittel dazu, den elektrischen Kontakt zwischen der Kathode und den Kontaktelementen über die Gitterpunkte des Netzes gleichmäßig zu gewährleisten und somit mangelnde Querleitfähigkeit der Kathode auszugleichen. Durch den Einsatz von Silbernetzen kann die Anzahl der Kontaktelemente erheblich reduziert werden.

Ein Brennstoffzellenstapel umfaßt mindestens zwei solcher Hochtemperaturbrennstoffzellen (Anspruch 7). Dadurch werden höhere Leistungen erzielt.

Die Aufgabe wird des weiteren gelöst durch ein Verfahren zur Herstellung einer solchen Vorrichtung (Anspruch 8). Dabei ist vorgesehen, daß einer der Grundfläche der Kontaktelemente entsprechende Öffnung in eine Interkonnektorplatte eingebracht und die Kontaktelemente in die Öffnungen formschlüssig eingeführt werden. Anschließend werden die Kontaktelemente mit der Interkonnektorplatte verbunden, so daß die Öffnungen gasdicht verschlossen werden.

Die gasdichte Verbindung kann z.B. durch Stauchung der Kontaktelemente hergestellt werden. Der Stauchvorgang kann bei Raumtemperatur erfolgen. Wird eine uniaxiale Presse verwendet, kann die Stauchung der Kontaktelemente gleichmäßig durchgeführt werden, damit alle Kontaktelemente mit gleicher Höhe aus der Interkonnektorplatte herausragen. Durch die Stauchung des Materials und die Wärmeausdehnung beim Aufheizen werden die Öffnungen in der Interkonnektorplatte durch die Kontaktelemente gasdicht verschlossen. Es sind aber auch andere Verfahren denkbar, durch die die Öffnungen in der Interkonnektorplatte durch die Kontaktelemente gasdicht verschlossen werden, so z.B. Lötverfahren.

Mit einem solchen Verfahren ist es vorstellbar, in Ausgestaltung der Erfindung eine Brennstoffzelle oder einen Brennstoffzellenstapel zu bilden (Anspruch 9).

Im folgenden wird die Erfindung anhand der Beschreibung eines Ausführungsbeispiels unter Bezugnahme auf die beigefügte Figur erläutert.

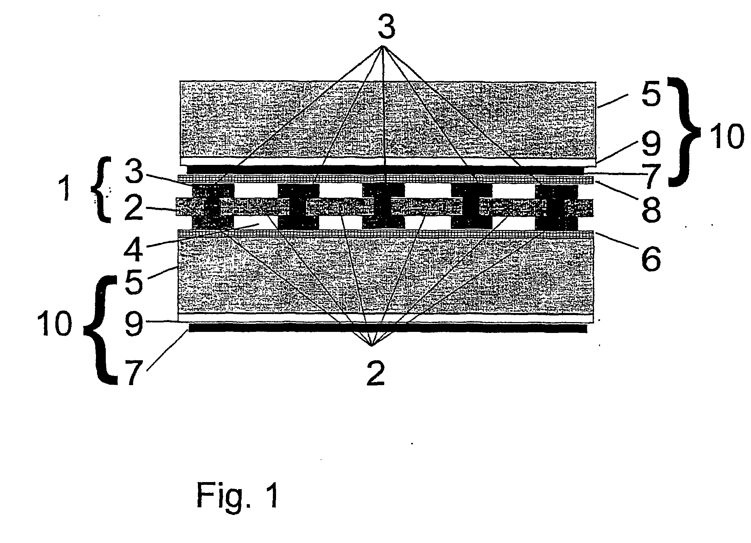

Fig. 1 zeigt schematisch einen Querschnitt durch zwei Brennstoffzellen 10, jeweils bestehend aus Anode 5, Kathode 7 und Elektrolyt 9. Die Brennstoffzellen 10 sind durch die Vorrichtung 1 miteinander verbunden. Vorrichtung 1 besteht aus einer Interkonnektorplatte 2, in die Öffnungen und sogenannte Kontaktelemente 3 eingebracht sind. Die Öffnungen sind gasdicht mit den Kontaktelementen 3 verschlossen. In Fig. 1 sind fünf Kontaktelemente 3 abgebildet. Die Interkonnektorplatte 2 ist in diesem Fall aus einer Eisen-Chrom-Aluminium-Legierung mit 5% Aluminiumanteil gefertigt und besitzt eine Stärke von 200 µm. Alle Setzköpfe ragen gleichmäßig ober- und unterhalb der Interkonnektorplatte 2 um 1 mm heraus. Die Setzköpfe 3 enthalten mindestens 99,97 % Silber (Feinsilber). Der Abstand zwischen den Öffnungen beträgt über die gesamte Fläche der Interkonnektorplatte 2 hinweg gleichmäßig 1 cm. Die Silbersetzköpfe 3 bieten den Vorteil, daß sie bei einer Einsatztemperatur von 800 °C sowohl unter reduzierenden als auch unter oxidierenden Bedingungen langzeitstabil den Strom gut leiten. Die Abdampfrate der Silbersetzköpfe 3 wird durch die kleine, dem Gasstrom ausgesetzte Oberfläche gering gehalten. Ein weiterer Vorteil ist durch die Höhe der aus der Interkonnektorplatte 2 herausragenden Silbersetzköpfe 3 von 0,9 mm gegeben, da bei dieser Ausführungsform keine zusätzlichen Gasverteilerstrukturen 4 nötig sind. Zusätzliche zeit- und kostenintensive Arbeitsschritte wie Fräsen oder Tiefziehen von Bauelementen zur Herstellung von Gaskanälen werden somit vermieden. In Figur 1 sind insgesamt vier Gasverteilerstrukturen oberhalb und vier Gasverteilerstrukturen unterhalb der Interkonnektorplatte angedeutet, von denen aus Platzgründen nur eine mit Bezugszeichen versehen ist. Bei der Anode 5 der in Fig. 1 unten abgebildeten Brennstoffzelle 10 ist der Kontakt zu den Silbersetzköpfen 3 über ein elastisches Nickelnetz 6 gewährleistet. Es hat eine Stärke von 250 µm und eine Maschenweite von 200 µm. Der Durchmesser der Drähte beträgt 125 µm. Bei der Kathode 7 der in Fig. 1 oben abgebildeten Brennstoffzelle 10 wird der Kontakt an die Silbersetzköpfe 3 über ein elastisches Silbernetz 8 gewährleistet. Es besitzt eine Stärke von 0,7 mm und eine Maschenweite von 0,9 mm. Ohne Einschränkung der Erfindung können aber auch andere Werte gewählt werden.

Es bestehen über die Form und die Abstände der Kontaktelemente in der Interkonnektorplatte weitere Varianten zur Ausgestaltung der Gasverteilerstrukturen. Es ist beispielsweise vorstellbar, daß, ähnlich wie bei der bipolaren Platte, durch die Form der Kontaktelemente durchgehende Stege ausgebildet werden, die Gaskanäle zur Versorgung der Elektroden voneinander trennen, beispielsweise dadurch, daß rechteckige Kontaktelemente entsprechende Öffnungen gasdicht verschließen.

## Patentansprüche

1. Vorrichtung (1) zur elektrischen Kontaktierung von Elektroden (5, 7) einer Hochtemperaturbrennstoffzelle,
**gekennzeichnet durch** eine Interkonnektorplatte (2) mit Öffnungen und darin befindlichen Kontaktelementen (3) zur elektrischen Kontaktierung der Elektroden (5, 7), wobei die Kontaktelemente (3) auf beiden Seiten der Interkonnektorplatte (2) in vorgegebener Höhe herausragen und die Öffnungen gasdicht verschließen.

2. Vorrichtung nach vorhergehendem Anspruch, wobei alle Kontaktelemente (3) gleich hoch aus der Interkonnektorplatte (2) herausragen.

3. Vorrichtung (1) nach Anspruch 1 oder 2,
**dadurch gekennzeichnet,**
**daß** die Kontaktelemente (3) mindestens 99,97 % Silber enthalten.

4. Hochtemperaturbrennstoffzelle umfassend eine Vorrichtung nach einem der vorhergehenden Ansprüche.

5. Hochtemperaturbrennstoffzelle nach Anspruch 4, umfassend ein elastisches Nickelnetz (6) zwischen den Kontaktelementen (3) und einer Anode (5) als Elektrode.

6. Hochtemperaturbrennstoffzelle nach einem der Ansprüche 4 oder 5, umfassend ein elastisches Silbernetz (8) zwischen den Kontaktelementen (3) und einer Kathode (7) als Elektrode.

7. Brennstoffzellenstapel umfassend mindestens zwei Hochtemperaturbrennstoffzellen nach einem der Ansprüche 4-6.

8. Verfahren zur Herstellung einer Vorrichtung nach einem der Ansprüche 1-3,
**gekennzeichnet durch** die Schritte:
- einer Grundfläche der Kontaktelemente (3) entsprechende Öffnungen werden in eine Interkonnektorplatte (2) eingebracht,
- die Kontaktelemente (3) werden in die Öffnungen formschlüssig eingeführt,
- die Kontaktelemente (3) werden mit der Interkonnektorplatte (2) verbunden, so daß die Öffnungen gasdicht verschlossen werden.

9. Verfahren zur Herstellung einer Brennstoffzelle oder eines Brennstoffzellenstapels nach einem der Ansprüche 4 bis 7, wobei die elektrische Kontaktierung der Elektroden (5, 7) gemäß Anspruch 8 vorgenommen wird.

## Claims

1. Device (1) for electrically contacting electrodes (5, 7) in a high-temperature fuel cell,
**characterised by** an interconnector plate (2) with openings and contact elements (3) located therein for electrically contacting the electrodes (5, 7), in which the contacts (3) project to a specified height on both sides of the interconnector plate (2) and gas seal the openings.

2. Device according to the foregoing claim, in which all the contacts (3) project by the same height from the interconnector plate (2).

3. Device (1) according to claim 1 or 2,
**characterised in that**
the contacts (3) contain at least 99.97% silver.

4. High-temperature fuel cell containing a device according to one of the foregoing claims.

5. High-temperature fuel cell according to claim 4, containing a flexible nickel network (6) between the contacts (3) and an anode (5) forming the electrode.

6. High-temperature fuel cell according to one of claims 4 or 5, containing a flexible silver network (8) between the contacts (3) and a cathode (7) forming the electrode.

7. Fuel cell stack containing at least two high-temperature fuel cells according to one of claims 4-6.

8. Method of production of a device according to one of claims 1-3,
**characterised by** the steps:
- Openings corresponding to a base area of the contacts (3) are formed in an interconnector plate (2),
- The contacts (3) are inserted into the openings to make a positive connection,
- The contacts (3) are connected to the interconnector plate (2) so that the openings are gas sealed.

9. Method of production of a fuel cell or fuel cell stack according to one of claims 4 to 7, in which the electrical contacting of the electrodes (5, 7) takes place according to claim 8.

## Revendications

1. Dispositif (1) pour la mise en contact électrique d'électrodes (5, 7) d'une pile à combustible à haute température, **caractérisé par** une plaque d'interconnexion (2) avec des ouvertures et des éléments de contact (3) se trouvant dans celles-ci pour la mise en contact électrique des électrodes (5, 7), dans lequel les éléments de contact (3) sortent d'une hauteur prédéterminée sur les deux faces de la plaque d'interconnexion (2) et obturent hermétiquement les ouvertures.

2. Dispositif selon la revendication précédente, dans lequel tous les éléments de contact (3) sortent d'une hauteur égale hors de la plaque d'interconnexion (2).

3. Dispositif (1) selon la revendication 1 ou 2, **caractérisé en ce que** les éléments de contact (3) contiennent au moins 99,97 % d'argent.

4. Pile à combustible à haute température comprenant un dispositif selon l'une quelconque des revendications précédentes.

5. Pile à combustible à haute température selon la revendication 4, comprenant un réseau de nickel élastique (6) entre les éléments de contact (3) et une anode (5) comme électrode.

6. Pile à combustible à haute température selon l'une des revendications 4 ou 5, comprenant un réseau d'argent élastique (8) entre les éléments de contact (3) et une cathode (7) comme électrode.

7. Empilement de piles à combustible comprenant au moins deux piles à combustible à haute température selon l'une quelconque des revendications 4 - 6.

8. Procédé pour fabriquer un dispositif selon l'une quelconque des revendications 1 - 3, **caractérisé par** les étapes suivantes:
- on pratique dans une plaque d'interconnexion (2) des ouvertures correspondant à une surface de base des éléments de contact (3),
- on introduit par emboîtement les éléments de contact (3) dans les ouvertures,
- on assemble les éléments de contact (3) à la plaque d'interconnexion (2), de telle façon que les ouvertures soient obturées hermétiquement.

9. Procédé pour fabriquer une pile à combustible ou un empilement de piles à combustible selon l'une quelconque des revendications 4 à 7, dans lequel la mise en contact électrique des électrodes (5, 7) est effectuée selon la revendication 8.
